# DEMANDE DE BREVET EUROPEEN

(11) **EP 1 123 841 A1**
(43) Date de publication de la demande: **16.08.2001**
(21) Numéro de dépôt: 01400260.4
(22) Date de dépôt: 02.02.2001
(51) Int. Cl.: B60R 13/02, B60R 22/24

(54) **Panneau d'habillage intérieur pour un habitacle de véhicule automobile**

(30) Priorité: 11.02.2000 FR 0001704
(71) Demandeur: Renault, 92100 Boulogne Billancourt (FR)
(72) Inventeur: Ponceau, Philippe, 78610 Le Perray en Yvelines (FR)

(57) **Abrégé**

L'invention propose un panneau (22) d'habillage intérieur d'un habitacle de véhicule automobile, du type qui est destiné à prendre place sur un montant latéral de l'habitacle et à être traversé par une sangle (24) d'une ceinture de sécurité du véhicule automobile, et du type qui comporte une lèvre (28) qui est destinée à être agencée au contact de la sangle (24) de la ceinture, caractérisé en ce que la lèvre (28) est réalisée venue de matière avec le panneau (22).

## Description

L'invention concerne un panneau d'habillage intérieur d'un habitacle de véhicule automobile.

L'invention concerne plus particulièrement un panneau d'habillage intérieur d'un habitacle de véhicule automobile, du type qui est destiné à prendre place sur un montant latéral de l'habitacle et à être traversé par une sangle d'une ceinture de sécurité du véhicule automobile, et du type qui comporte une lèvre qui est destinée à être agencée au contact de la sangle de la ceinture.

On connaît de nombreux exemples de panneaux d'habillage intérieur de ce type.

Il s'agit pour la plupart de panneaux qui sont destinés à être fixés sur un montant latéral de l'habitacle, notamment un montant latéral arrière du véhicule, par l'intermédiaire de moyens rapides de fixation, et qui portent une lèvre rapportée qui est destinée à être agencée au contact de la sangle de la ceinture pour remplir des fonctions esthétiques et protéger le mécanisme associé de ceinture de sécurité, qui est dissimulé derrière ledit panneau, de l'éventuelle intrusion de corps étrangers qui seraient susceptibles de venir perturber son bon fonctionnement.

L'agencement d'une lèvre rapportée sur le panneau augmente considérablement son coût de fabrication, du fait de la nécessité de pratiquer dans le panneau un siège d'appui pour la lèvre, du fait du coût propre de la lèvre, et du fait du coût de l'assemblage de la lèvre au panneau.

Pour remédier à ces inconvénients, l'invention propose un panneau d'habillage intérieur d'un habitacle de véhicule automobile du type décrit précédemment, caractérisé en ce que la lèvre est réalisée venue de matière avec le panneau.

Selon d'autres caractéristiques de l'invention :
- le panneau est réalisé par moulage d'un matériau plastique,
- le panneau comporte une partie principale qui est moulée suivant une épaisseur élevée pour assurer la rigidité du panneau, et une partie d'ouverture qui est destinée à permettre le passage de la sangle de la ceinture, et
- la partie d'ouverture comporte la lèvre qui est moulée suivant une épaisseur intermédiaire et qui présente la forme d'un anneau, et une partie de peau qui est moulée intérieurement à l'anneau suivant une épaisseur réduite et qui est destinée, lors du montage du véhicule, à être crevée par une boucle de la ceinture de sécurité initialement montée sur le montant latéral avant le montage définitif du panneau d'habillage sur le montant.

D'autres caractéristiques et avantages de l'invention apparaîtront à la lecture de la description détaillée qui suit pour la compréhension de laquelle on se reportera aux dessins annexés dans lesquels:
- la figure 1 est une vue en perspective de l'intérieur d'un habitacle de véhicule automobile comportant un panneau d'habillage intérieur représenté monté,
- la figure 2 est une vue en coupe selon la ligne 2-2 de la figure 1 illustrant un panneau d'habillage intérieur conforme à l'invention et la boucle de la ceinture associée avant leur montage,
- la figure 3 est une vue selon la figure 2 illustrant le panneau d'habillage intérieur selon l'invention et la boucle de la ceinture pendant leur montage.

Dans la description qui va suivre, des chiffres de référence identiques désignent des pièces identiques ou ayant des fonctions similaires.

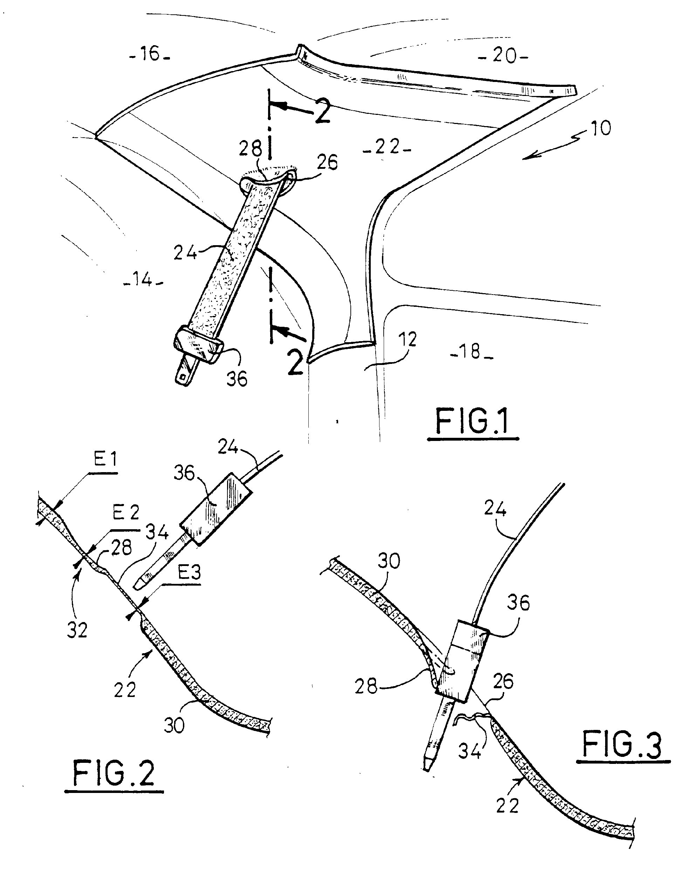

On a représenté à la figure 1 l'intérieur d'un habitacle 10 de véhicule automobile.

De manière connue, l'habitacle 10 comporte notamment au moins un montant latéral 12 dit "montant de custode" qui est agencé latéralement par rapport à un siège arrière 14 du véhicule, devant une vitre 16 transversale arrière du véhicule et en arrière d'une porte arrière 18 du véhicule. Dans sa partie supérieure, le montant latéral 12 rejoint un pavillon ou toit 20 du véhicule.

Le montant latéral 12 est recouvert d'un panneau 22 qui est traversé par une sangle 24 d'une ceinture de sécurité dont un mécanisme (non représenté) peut par exemple être fixé sur le montant 12. A cet effet, le panneau 22 comporte une ouverture 26 qui est destinée à permettre le passage de la sangle 24 de la ceinture. Le panneau 22 est par exemple fixé sur le montant par l'intermédiaire d'agrafes (non représentées) de fixation rapide.

Une lèvre 28, notamment une lèvre élastique, qui est portée par le panneau 22, entoure l'ouverture 26 de manière à être agencée en permanence au contact de la sangle 24 de la ceinture.

Conventionnellement, la lèvre 28 est rapportée sur le panneau 22. Par exemple, la lèvre peut être réalisée sous la forme d'un anneau qui est monté par emboîtement à travers l'ouverture 26.

L'inconvénient d'une telle conception réside dans le coût de fabrication prohibitif d'un panneau équipé d'une telle lèvre.

Pour remédier à cet inconvénient, le panneau 22 comporte une lèvre 28 qui est réalisée venue de matière avec le panneau.

A cet effet, le panneau est réalisé par moulage, notamment d'un matériau plastique.

Comme l'illustre la figure 2, qui représente le panneau 22 avant son montage, le panneau 22 comporte une partie principale 30 qui est moulée suivant une épaisseur "E₁" élevée pour assurer la rigidité du panneau 22, et une partie d'ouverture 26 qui est destinée à permettre le passage de la sangle 24 de la ceinture.

La partie d'ouverture 32 comporte la lèvre 28 qui est moulée suivant une épaisseur intermédiaire "E₂" dans le matériau plastique du panneau, et qui présente la forme d'un anneau, comme il a été représenté à la figure 1. A l'intérieur de l'anneau formé par la lèvre 28, la partie d'ouverture 32 comporte une partie de peau 34 qui est moulée intérieurement à l'anneau suivant une épaisseur "E3" très réduite.

Comme l'illustre la figure 2, au début du montage du véhicule, le panneau 22 est présenté avec sa partie d'ouverture en regard d'une boucle 36 de la ceinture de sécurité. La ceinture de sécurité est initialement montée sur le montant 12 latéral du véhicule.

Puis, comme l'illustre la figure 3, le panneau est rapproché de la boucle 36 de la ceinture de sécurité jusqu'à ce que celle-ci vienne crever la partie de peau 34, comme illustré à la figure 3. De la sorte, la lèvre 28 délimite l'ouverture 26 qui résulte de la disparition de la partie de peau 34. Puis la boucle 36 déforme la lèvre 28, initialement dans le prolongement du panneau 22, pour traverser le panneau 22.

L'ouverture 26 peut alors être ébarbée manuellement pour la débarrasser des débris résiduels de la partie de peau 34.

Après le passage de la boucle 36, la lèvre 28 est au contact de la sangle 24 de la ceinture de sécurité.

Le panneau 22 peut alors être monté sur le montant latéral au moyen d'agrafes conventionnelles.

L'invention permet avantageusement de simplifier le montage d'un panneau d'habillage intérieur.

L'invention peut trouver à s'appliquer pour tout élément d'habillage intérieur destiné à être traversé par un quelconque élément porté par un montant du véhicule.

## Revendications

1. Panneau (22) d'habillage intérieur d'un habitacle (10) de véhicule automobile, du type qui est destiné à prendre place sur un montant (12) latéral de l'habitacle (10) et à être traversé par une sangle (24) d'une ceinture de sécurité du véhicule automobile, et du type qui comporte une lèvre (28) qui est destinée à être agencée au contact de la sangle (24) de la ceinture,
caractérisé en ce que la lèvre (28) est réalisée venue de matière avec le panneau (22).

2. Panneau (22) selon la revendication précédente, caractérisé en ce qu'il est réalisé par moulage d'un matériau plastique.

3. Panneau (22) selon la revendication précédente, caractérisé en ce qu'il comporte une partie principale (30) qui est moulée suivant une épaisseur (E₁) élevée pour assurer la rigidité du panneau (22), et une partie d'ouverture (32) qui est destinée à permettre le passage de la sangle (24) de la ceinture.

4. Panneau (22) selon la revendication précédente, caractérisé en ce que la partie d'ouverture (32) comporte la lèvre (28) qui est moulée suivant une épaisseur intermédiaire (E₂) et qui présente la forme d'un anneau, et une partie (34) de peau qui est moulée intérieurement à l'anneau suivant une épaisseur réduite (E₃) 'et qui est destinée, lors du montage du véhicule, à être crevée par une boucle (36) de la ceinture de sécurité initialement montée sur le montant (12) latéral avant le montage définitif du panneau d'habillage(22) sur le montant (12).
